# DEMANDE DE BREVET EUROPEEN

(11) **EP 4 847 940 A1**
(43) Date de publication de la demande: **02.12.2026**
(21) Numéro de dépôt: 25305761.6
(22) Date de dépôt: 27.05.2025
(51) Int. Cl.: G01S 5/02

(54) **PROCÉDÉ DE LOCALISATION D ÉMETTEURS RADIO**

(71) Demandeur: BULL SAS, 78340 Les Clayes-Sous-Bois (FR)
(72) Inventeur: TENEZE, Bernard, 13640 La Roque-d'Anthéron (FR)
(74) Mandataire: IPAZ

(57) **Abrégé**

L'invention concerne un procédé (200) pour localiser, avec un appareil de goniométrie aéroporté mobile, plusieurs émetteurs radios, ledit procédé (200) comprenant les étapes suivantes :
- réception (202), par ledit appareil de goniométrie aéroporté mobile, de signaux émis par lesdits émetteurs ;
- pour au moins un signal reçu, détermination (204) d'une position d'un émetteur dudit signal, ladite étape de détermination (204) comprenant les étapes suivantes :
▪ mesure (206) d'une position estimée, ladite position comprenant un angle de site,
▪ lorsque la différence entre l'angle de site de la position estimée et l'angle de site d'une position actuelle d'un émetteur est inférieure à une valeur seuil, une pondération (208) de la position estimée par un coefficient de pondération fonction de la valeur de l'angle de site,
▪ correction (210) de la position actuelle de l'émetteur par moyennage de ladite position estimée pondérée avec ladite actuelle position dudit émetteur.

Elle concerne également un programme d'ordinateur, un dispositif de localisation et un appareil de goniométrie aéroporté mettent en œuvre un tel procédé.

## Description

### Domaine technique

La présente invention concerne un procédé pour localiser des émetteurs radios émettant sur un même canal avec un appareil de goniométrie aéroporté mobile. Elle concerne également un dispositif et un appareil de goniométrie aéroporté pour localiser plusieurs émetteurs radios.

Le domaine de l'invention est celui de la détection d'émetteurs radios, notamment celui de la détection d'émetteurs radios émettant sur un même canal et positionnés proches des uns des autres.

### État de la technique

On connaît des procédés de localisation, au fil de l'eau, avec un appareil de goniométrie aéroporté, d'émetteurs radios émettant sur un même canal.

Ces procédés sont fonctionnels mais posent différents problèmes notamment de résolution spatiale. En effet, lorsque des émetteurs radio émettant sur un même canal sont positionnés très proches des uns et des autres, les procédés existants de localisation d'émetteurs radio ont tendance à ne voir qu'un seul émetteur. Par conséquent, ces procédés manquent de résolution spatiale. En outre, dans ces conditions, la position détectée est souvent erronée et ne correspond pas à une position réelle d'un émetteur mais à une position intermédiaire se trouvant entre les positions réelles des émetteurs radio se trouvant à proximité les uns des autres.

### Exposé de l'invention

L'invention a pour but de pallier au moins un des inconvénients précités.

Un autre but de l'invention est de proposer un procédé permettant de localiser des émetteurs radio avec une meilleure résolution spatiale.

Un autre but de l'invention est de proposer un procédé pour localiser plusieurs émetteurs radio de manière plus juste, plus précise et plus fiable.

L'invention permet d'atteindre au moins un des buts précités par un procédé pour localiser, avec un appareil de goniométrie aéroporté mobile, des émetteurs radios émettant sur un même canal, ledit procédé comprenant les étapes suivantes :
- réception, par ledit appareil de goniométrie aéroporté mobile, de signaux émis par lesdits émetteurs ; et
- pour au moins un, en particulier chaque, signal reçu, détermination d'une position d'un émetteur dudit signal, ladite étape de détermination comprenant les étapes suivantes :
   - mesure d'une position d'émission, dite position estimée, dudit signal reçu, ladite position comprenant un angle de site,
   - lorsque la différence entre l'angle de site de ladite position estimée et l'angle de site d'une position actuelle d'un émetteur préalablement détecté est inférieure à une valeur seuil prédéterminée, correction de ladite position actuelle dudit émetteur par moyennage de ladite position estimée avec ladite actuelle position dudit émetteur, et
   - mémorisation de ladite position corrigée comme nouvelle position dudit émetteur.

Selon l'invention, l'étape de détermination comprend en outre, préalablement à ladite étape de correction, une pondération de la position estimée par un coefficient de pondération dont la valeur est fonction de la valeur de l'angle de site, ladite étape de correction prenant en compte ladite position estimée pondérée.

Ainsi, le procédé selon l'invention calcule une moyenne avec une pondération de la position estimée avec un coefficient de pondération dont la valeur est prédéfinie et dépend de la valeur de l'angle de site. La correction de la position actuelle d'un émetteur existant dépend ainsi de la valeur du coefficient de pondération. Une telle pondération permet, pour au moins certains angles de sites, de favoriser la position estimée dans le moyennage, ce qui a pour conséquence de rapprocher la position d'un émetteur déjà détecté, après correction, en direction de ladite position estimée. Ce faisant, le procédé selon l'invention rend possible la discrimination de deux émetteurs radio proches l'un de l'autre au fur et à mesure que l'angle de site augmente, c'est-à-dire au fur et à mesure que l'appareil de goniométrie s'approche desdits émetteurs.

Le procédé selon l'invention permet ainsi de localiser spatialement des émetteurs radio même si la distance séparant ces émetteurs est faible. Par conséquent, le procédé selon l'invention améliore la résolution spatiale de la localisation des émetteurs radios émettant sur un même canal. Il permet notamment d'accroitre le pouvoir séparateur spatial d'un appareil de goniométrie.

De plus, comme la résolution spatiale est améliorée, les émetteurs radios sont localisées avec une plus grande précision. Le procédé selon l'invention est donc plus juste, plus fiable et plus précis.

Dans la présente demande, par « angle de site » on entend un angle formé entre la projection de l'horizon au niveau de l'appareil de goniométrie mobile et la direction reliant l'appareil de goniométrie à chaque émetteur radio.

Par « signal radio », on entend un signal radiofréquence, compris par exemple dans la gamme de fréquence comprise entre 30MHz et 3000MHz.

Dans la suite, les valeurs numériques associées aux angles de site peuvent comprendre la valeur absolue de ces valeurs.

Suivant une caractéristique particulièrement avantageuse, lors de l'étape de détermination, la position corrigée de l'émetteur peut être mémorisée comme nouvelle position de l'émetteur si et seulement ladite position corrigée présente un angle de site inférieur à l'angle de la position actuelle dudit émetteur.

Ainsi, le procédé selon l'invention mémorise la position corrigée comme nouvelle position si et seulement son angle de site est inférieur à celui de la position actuelle. Dans le cas contraire, la position corrigée n'est pas enregistrée.

Cette caractéristique avantageuse permet d'arrêter de corriger la position actuelle d'un émetteur lorsque l'angle de site augmente, c'est-à-dire lorsque l'appareil de goniométrie aéroporté mobile s'éloigne des émetteurs radio. En effet, lorsque l'appareil de goniométrie aéroporté s'éloigne des émetteurs radio, l'angle de site détecté diminue et les positions des émetteurs radio ont tendance à se rapprocher aussi. Cela vient fausser la détection et voire aboutir à une confusion de plusieurs émetteurs émettant sur le même canal de fréquence. Pour éviter ce phénomène, dès que l'appareil de goniométrie aéroporté commence à s'éloigner, les positions préalablement détectées sont conservées et ne sont plus corrigées.

En effet, c'est pour des angles de site élevés que la localisation spatiale est la moins précise car les émetteurs se rapprochent de la limite de la résolution spatiale. Par conséquent, le procédé selon l'invention ne mémorise pas des positions corrigées lorsque l'angle de site augmente. Ces positions ne seront pas prises en compte dans la suite de la localisation spatiale ce qui permet d'améliorer la précision de la localisation spatiale et d'en limiter les erreurs de localisation.

En d'autres termes, cette caractéristique vient arrêter la correction des positions préalablement détectées lorsque l'appareil de goniométrie s'éloigne de ces positions.

De plus, suivant une caractéristique avantageuse, lorsque la différence entre l'angle de site de ladite position estimée et l'angle de site d'une position actuelle d'un émetteur préalablement détecté est supérieure à la valeur seuil prédéterminée, l'étape de détermination peut comprendre une étape de mémorisation de ladite position estimée en tant position d'un nouvel émetteur.

Ainsi, suivant l'invention, lorsque la condition énoncée ci-dessus est satisfaite, une nouvelle position d'émetteur est créée par le procédé suivant l'invention. Cela signifie que le procédé a localisé un nouvel émetteur. De cette manière, le procédé suivant l'invention peut localiser plusieurs émetteurs même si ces émetteurs sont proches l'un de l'autre.

La valeur seuil prédéterminée peut être égale à 5 degrés, ou 10 degrés, ou encore 15 degrés, ou encore 30 degrés. Elle peut être déterminée en fonction de la fréquence d'écoute de l'appareil de goniométrie.

Préférentiellement, la valeur du coefficient de pondération pris en compte lors de l'étape de correction peut augmenter lorsque l'angle de site de la position estimée diminue.

De cette manière, le procédé adapte sa pondération en fonction de la proximité de l'appareil de goniométrie mobile avec les émetteurs radio. Ainsi, la précision et la séparation spatiale de la détection sont améliorées au fur et à mesure que l'appareil de goniométrie s'approche des émetteurs radio. Ainsi, les positions d'émetteurs présentant des angles de site proches de l'aplomb de l'appareil de goniométrie mobile se voient attribuées une pondération plus élevée que celle attribuée à des positions présentant des angles de site plus éloignés, ce qui permet d'accroître la précision de la localisation et ce qui limite encore plus les erreurs de localisation.

L'augmentation de la valeur du coefficient de pondération peut être continue ou discrète, lorsque l'angle de site diminue.

Le procédé selon l'invention peut utiliser plusieurs, en particulier trois, intervalles d'angles de site prédéfinis, et pour chaque intervalle une valeur différente prédéfinie pour le coefficient de pondération.

Ainsi, l'invention classifie les positions estimées suivant leur angle de site en plusieurs intervalles. Chaque intervalle se voit attribuée une valeur de pondération. Plus la valeur de pondération est élevée, plus la précision et la discrimination spatiale sont grandes.

Suivant des modes de réalisation, le coefficient de pondération associé à un intervalle peut être utilisé, lorsque plusieurs, en particulier quatre, positions estimées, ont un angle de site se trouvant dans ledit intervalle.

Ainsi, le moyennage prend en compte le coefficient de pondération lorsque plusieurs positions estimées sont détectées pour cet intervalle. Ceci améliore la fiabilité de la localisation et permet d'éliminer les erreurs de détections par l'appareil de goniométrie aéroporté.

Suivant un exemple de réalisation non limitatif :
- un premier intervalle peut comprendre les angles de site compris entre 90 et 45 degrés,
- un deuxième intervalle peut comprendre les angles de site compris entre 45 et 20 degrés, et
- un troisième intervalle peut comprendre les angles de site compris entre 20 et 0 degrés.

De manière nullement limitative, une première valeur de pondération prédéterminée peut être associée au premier intervalle.

De plus, une deuxième valeur de pondération peut être associée au deuxième intervalle, ladite deuxième valeur étant supérieure à la première valeur de pondération, de préférence au moins dix fois supérieure à la première valeur, en particulier au moins cent fois supérieure à la première valeur.

En outre, une troisième valeur de pondération peut être associée au troisième intervalle, ladite troisième valeur étant supérieure à la deuxième valeur de pondération, de préférence au moins cent fois supérieure à la première valeur, en particulier au moins mille fois supérieure.

Ainsi, plus l'angle de site est faible, plus le coefficient de pondération est petit. Cela permet d'augmenter la correction appliquée lorsque l' angle de site augmente, car la localisation spatiale est considérée comme plus juste et plus fiable. De telles valeurs de pondération accroissent la précision du procédé selon l'invention.

La première valeur de pondération peut être inférieure ou égale à 10, de préférence elle peut être égale à 1.

La valeur de la première valeur peut ainsi être choisie dans une plage de valeurs standards.

Suivant des modes de réalisation, la pondération de la position estimée peut être réalisée si et seulement l'angle de site de la position estimée est supérieur ou égale à une valeur minimale prédéterminée, tel que par exemple supérieure ou égale à 20°. Ainsi, l'amélioration de la précision et de la discrimination spatiale apportée par la pondération n'est mise en œuvre que lorsque l'angle de site de la position estimée dépasse la valeur minimale.

Le fait d'utiliser un premier intervalle d'angles de site auquel est associée une valeur de pondération égale à 1 est un exemple de réalisation non limitatif et d'autres exemples de réalisation sont possible.

Selon un autre aspect de l'invention, il est proposé un programme informatique comprenant des instructions exécutables par un dispositif informatique, qui, lorsqu'elles sont exécutées, mettent en œuvre toutes les étapes du procédé selon l'invention.

Le programme informatique peut être codé dans tout langage informatique tel que C, C++, JAVA, Python, langage machine, etc.

Il est également proposé un support informatique sur lequel est mémorisé, de manière non transitoire, un tel programme informatique.

Le support informatique peut être un ordinateur, une clef USB, une carte mémoire, un compact disc, etc.

Selon encore un autre aspect de l'invention, il est proposé un dispositif informatique comprenant des moyens configurés pour mettre en œuvre toutes les étapes du procédé selon l'invention.

Le dispositif selon l'invention confère les mêmes avantages que ceux énumérés pour le procédé selon l'invention.

Le dispositif informatique peut être un PC, une unité de calcul, un module de calcul ou tout autre appareil informatique et/ou électronique.

En particulier, le dispositif informatique peut être une carte électronique comprenant au moins un composant analogique et/ou au moins un composant numérique.

Dans un mode de réalisation particulier, le dispositif informatique peut être un processeur, une puce, un calculateur, programmé pour réaliser les étapes du procédé selon l'invention.

Selon un autre aspect de l'invention, il est proposé un appareil de goniométrie aéroporté comprenant :
- un dispositif informatique selon l'invention, ou
- des moyens configurés pour mettre en œuvre toutes les étapes du procédé selon l'invention.

L'appareil de goniométrie aéroporté mobile peut comprendre au moins une antenne et au moins un récepteur.

De préférence, l'appareil de goniométrie aéroporté peut comprendre un réseau de plusieurs antennes, reliées à au moins un récepteur.

Un récepteur peut être associé à une antenne ou un unique récepteur peut être associé à plusieurs antennes. De préférence, le récepteur mobile est agencé pour réaliser les mesures sur les signaux reçus par les antennes.

### Description des figures et modes de réalisation

D'autres avantages et caractéristiques apparaîtront à l'examen de la description détaillée d'un mode de réalisation nullement limitatif, et des dessins annexés sur lesquels :
- les FIGURE 1A et 1B sont des représentations schématiques d'un procédé de détection d'émetteurs selon l'état de l'art ;
- la FIGURE 2 est une représentation schématique d'un premier exemple de réalisation d'un procédé selon l'invention ;
- la FIGURE 3 une représentation schématique d'un deuxième exemple de réalisation d'un procédé selon l'invention ;
- les FIGURES 4-6 sont des représentations schématiques différentes configuration de détection d'émetteurs radio par le procédé selon l'invention, pour différentes positions de l'appareil de goniométrie aéroporté mobile ;
- la FIGURE 5 est une représentation schématique illustrant, pour une autre position de l'appareil de goniométrie aéroporté mobile, la localisation d'au moins deux émetteurs par le procédé selon l'invention ; et
- la FIGURE 6 est une représentation schématique illustrant, pour encore une autre position de l'appareil de goniométrie aéroporté mobile, la localisation d'au moins deux émetteurs par le procédé selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

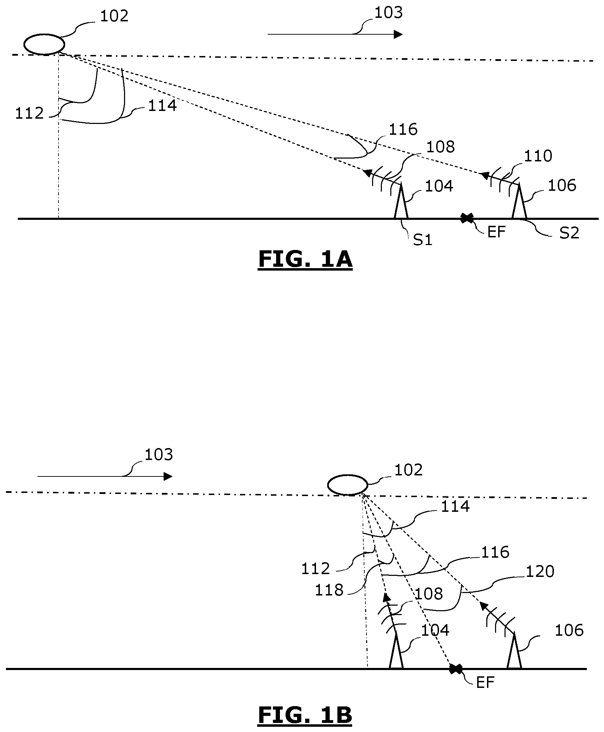

Les FIGURES 1A et 1B sont des représentations schématiques d'un procédé de détection spatial d'émetteurs radio selon l'état de l'art.

Les FIGURES 1A et 1B illustrent de manière schématique un appareil de goniométrie aéroporté mobile 102 et deux émetteurs radio 104 et 106, dits respectivement premier émetteur 104 et second émetteur 106. L'appareil de goniométrie aéroporté mobile 102 se déplace suivant un sens 103 allant du premier émetteur 104 vers le second émetteur 106.

Les FIGURES 1A et 1B illustrent une détection d'émetteurs radio selon l'état de l'art pour deux positions différentes de l'appareil de goniométrie aéroporté mobile 102.

Le premier émetteur 104 et le deuxième émetteur 106 émettent chacun un signal radio 108, 110 dans un même canal de fréquence.

Le premier émetteur 104 est positionné à une position S1 présentant un angle de site 112, dit premier angle de site. Le deuxième émetteur 106 est positionné à une position S2 qui présente un angle de site 114, dit deuxième angle de site.

Dans la configuration représentée sur la FIGURE 1A, la différence 116 entre le deuxième angle de site 114 et le premier angle de site 112 est inférieure à 5°, cet angle de 5° étant l'angle minimal de résolution spatiale de l'appareil de goniométrie mobile 102. Par conséquent, avec le procédé de l'état de l'art, il n'est pas possible de détecter directement les positions S1, S2 du premier émetteur 104 et du deuxième émetteur 106. Dans ce cas, le procédé de l'état de l'art associe une position fictive EF aux premier 104 et deuxième 106 émetteurs. De manière générale, la position fictive EF est positionnée au milieu du premier 104 et du deuxième 106 émetteurs car elle correspond à la moyenne des positions S1 et S2. Ainsi, l'appareil de goniométrie n'arrive pas à discriminer les émetteurs S1 et S2, et détecte de manière erronée un émetteur fictif EF.

Ainsi, une seule position d'émetteur est détectée alors que l'appareil de goniométrie aéroporté mobile 102 a réceptionné plusieurs signaux provenant de plusieurs émetteurs. En outre, la seule position détectée correspond à un émetteur fictif EF car elle ne correspond pas à la position réelle du premier émetteur 104 ni à la position réelle du second émetteur 106.

Dans la configuration représentée sur la FIGURE 1B, l'appareil de goniométrie aéroporté mobile 102 est plus proche des émetteurs 104 et 106, comparée à la configuration représentée sur la FIGURE 1A. Lorsque l'appareil de goniométrie mobile 102 se rapproche du premier 104 et deuxième 106 émetteurs, il va réceptionner de nouveaux signaux provenant du premier 104 et du deuxième 106 émetteurs. Les angles de site 112, 114 associés aux positions réelles du premiers émetteur 104 et deuxième 106 émetteurs diminuent puisque l'appareil de goniométrie aéroporté s'est rapproché des émetteurs 104 et 106.

En se rapprochant du premier 104 et deuxième 106 émetteurs, la différence 116 entre l'angle de site 112 du premier émetteur 104 et l'angle de site du deuxième 114 devient supérieure à l'angle minimal de résolution spatial. Cependant, la position de chaque signal reçu est comparée avec la position fictive EF de l'émetteur fictif précédemment détecté. De ce fait, la différence 118 entre l'angle de site de la position de l'émetteur fictif EF et l'angle de site 112 du premier émetteur 104 reste toujours inférieur à la valeur seuil de 5 degrés. Il en est de même pour la différence 120 entre l'angle de site 114 du deuxième émetteur 106 et l'angle de site de la position de l'émetteur fictif EF. De ce fait, le procédé suivant l'état de l'art est amené à comparer :
- la position du premier émetteur 104 avec la position de l'émetteur fictif EF, et
- la position du deuxième émetteur 106 avec la position de l'émetteur fictif EF.

Pour les deux cas, l'angle séparant l'émetteur fictif EF du premier émetteur 104, et l'angle séparant l'émetteur fictif EF du deuxième émetteur 106 sont tous les deux inférieures à la valeur seuil de résolution spatiale de l'appareil de goniométrie 102, à savoir par exemple 5°. Par conséquent, l'appareil de goniométrie mobile 102 conserve toujours la position fictive EF comme position spatiale du premier 104 et du deuxième 106 émetteurs, de sorte que l'appareil de goniométrie mobile ne détecte toujours qu'un seul émetteur, à savoir l'émetteur fictif EF qui n'existe pas.

L'invention permet de pallier cet inconvénient.

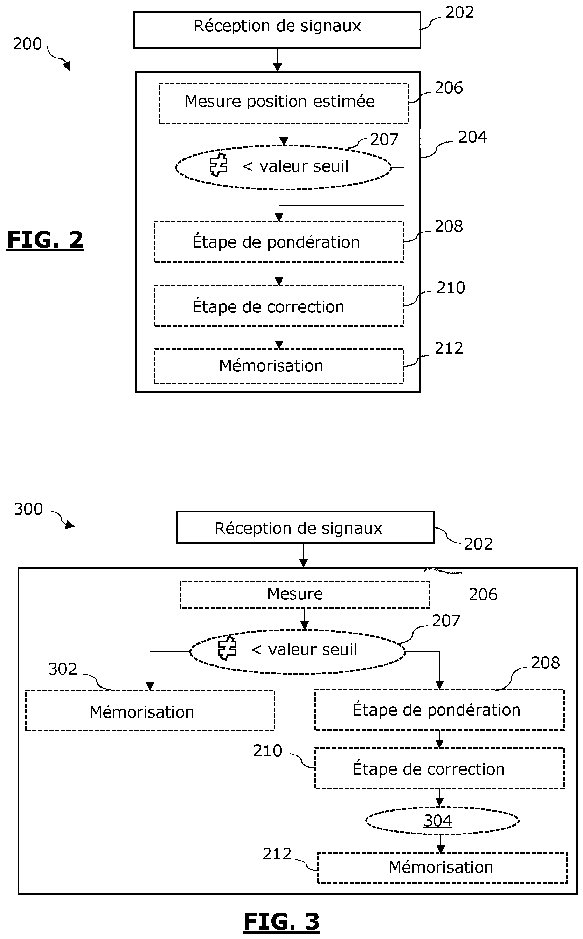

La FIGURE 2 est une représentation schématique d'un exemple de réalisation non limitatif d'un procédé selon l'invention.

Le procédé 200 de la FIGURE 2 permet de localiser, avec un appareil de goniométrie aéroporté mobile, plusieurs émetteurs radios émettant sur un même canal radio.

Le procédé 200 comprend une étape 202 de réception, par l'appareil de goniométrie aéroporté mobile de signaux émis par des émetteurs radio sur un même canal, et en particulier de même fréquence.

Pour chaque signal reçu par l'appareil de goniométrie aéroporté mobile, le procédé 200 comprend ensuite une étape de détermination 204 d'une position d'un émetteur du signal reçu.

L'étape de détermination 204 comprend une étape de mesure 206 d'une position d'émission, dite position estimée, du signal reçu, ladite position estimée comprenant un angle de site.

Le procédé 200 comprend ensuite une condition 207, dite première condition, testant la différence entre l'angle de site de la position estimée et une position actuelle d'un émetteur préalablement détecté.

Si la différence entre l'angle de site de ladite position estimée et l'angle de site d'une position actuelle d'un émetteur préalablement détecté est inférieure à une valeur seuil prédéterminée, par exemple 5°, alors l'étape de détermination 204 comprend ensuite, une étape de pondération 208 de la position estimée par un coefficient de pondération dont la valeur est fonction de la valeur de l'angle de site.

L'étape de détermination 204 comprend ensuite une étape de correction 210 de la position actuelle dudit émetteur par moyennage de ladite position estimée pondérée avec ladite actuelle position dudit émetteur.

Le procédé 200 comprend ensuite une étape de mémorisation de la position corrigée, obtenue à l'étape 210, comme nouvelle position pour cet émetteur préalablement détecté.

La FIGURE 3 est une représentation schématique d'un autre exemple de réalisation non limitatif d'un procédé selon l'invention.

Le procédé 300 illustré en FIGURE 3 comprend toutes les étapes du procédé 200 illustré en FIGURE 2.

Dans le procédé 300, dans le cas où la première condition 207 n'est pas satisfaite, c'est-à-dire quand la différence entre l'angle de site de ladite position estimée et l'angle de site d'une position actuelle d'un émetteur préalablement détecté est supérieure à une valeur seuil prédéterminée, alors le procédé 300 comprend une étape 302 de mémorisation de ladite position estimée en tant que position d'un nouvel émetteur qui vient d'être détecté. Un nouvel émetteur est donc créé à la position estimée et mémorisé.

Dans le, cas où la première condition 207 est satisfaite, alors le procédé 300 applique l'étape de pondération 208 puis l'étape de correction 210, telles que décrites plus haut.

Le procédé 300 comprend en outre après l'étape de correction 210, une condition supplémentaire 304, appelée deuxième condition 304, évaluant l'angle de site de la position corrigée obtenue à l'étape de correction 210. Suivant cette deuxième condition 304, si l'angle de site de la position corrigée présente un angle de site inférieur à l'angle de la position actuelle dudit émetteur, alors la position corrigée de l'émetteur est mémorisée comme nouvelle position lors de l'étape de mémorisation 212. Dans le cas contraire, la position corrigée n'est pas mémorisée.

Ainsi, le procédé 300, mémorise après l'étape de correction 210, uniquement des positions corrigées présentant un angle de site inférieur aux positions préalablement enregistrées. Cette deuxième condition permet de détecter que l'appareil de goniométrie aéroporté mobile s'éloigne des émetteurs préalablement détectés et d'arrêter la correction des positions déjà détectées.

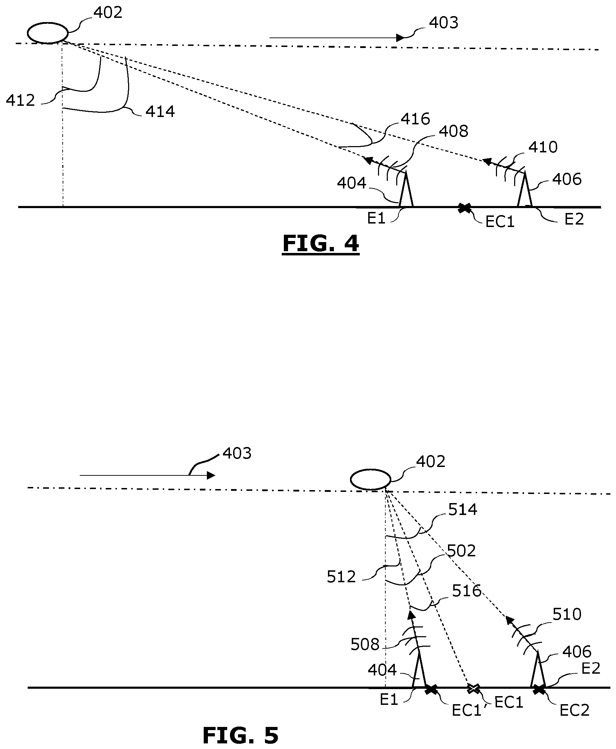

Les FIGURES 4 à 6 sont des représentations schématiques illustrant, pour différentes positions d'un appareil de goniométrie aéroporté mobile 402, la détection d'émetteurs radio selon l'invention, et en particulier selon l'un quelconque des procédés 200 ou 300.

Les émetteurs 404, 406 illustrés sur les FIGURES 4-6 sont nommés premier émetteur 404 et deuxième émetteur 406. Le premier 404 et deuxième 406 émetteurs sont agencés pour envoyer des signaux radios sur un même canal de fréquence, par exemple des signaux de fréquence 300MHz.

Sur la FIGURE 4, l'appareil de goniométrie aéroporté mobile 402 est loin des émetteurs 404 et 406, mais en approche desdits émetteurs 404 et 406. L'appareil de goniométrie aéroporté mobile 402 est en mouvement et se dirige suivant une direction 403 allant du premier émetteur 404 vers le deuxième émetteur 406.

Sur la FIGURE 4, le premier émetteur 404 émet un signal, dit premier signal 408, et le deuxième émetteur 406 émet un signal, dit deuxième signal 410. Le premier signal 408 et le deuxième 410 signal sont réceptionnés par l'appareil de goniométrie aéroporté mobile 402.

A la position de l'appareil de goniométrie aéroporté mobile 402 représentée sur la FIGURE 4, le premier émetteur 404 présente une position présentant un angle de site 412, dit premier angle de site 412, par exemple de 55°. Le deuxième émetteur 408 présente une position présentant un angle de site 414, dit deuxième angle de site 414, inférieur à 90 degrés, par exemple de 57° degrés.

Le premier signal 408 et le deuxième signal 410 sont réceptionnés par l'appareil de goniométrie aéroporté mobile 402. Les signaux 408, 410 sont traités séparément, par exemple l'un après l'autre, par exemple par une unité de traitement comprenant au moins un module de calcul, qui est configuré pour mettre en œuvre toutes les étapes d'un procédé selon l'invention, et en particulier l'un quelconque des procédés 200 ou 300.

Le premier signal reçu 408 est traité pour déterminer une position d'émission dudit signal reçu, à savoir la position E1. Dans le cas considéré, aucun émetteur n'a été préalablement détecté. Par conséquent, la position estimée du premier émetteur 404 est mémorisée comme position d'un nouvel émetteur radio.

Le deuxième signal 410 est réceptionné par l'appareil de goniométrie aéroporté mobile 402, après le premier signal 408. Une position estimée, notée E2, est déterminée par analyse dudit deuxième signal reçu 410, à savoir la position E2 du deuxième émetteur 406. L'angle de site de cette position estimée E2 est comparée à l'angle de site de la position E1 préalablement détectée. La différence entre ces angles est de 2°=57°-55°. Cette différence, est inférieure à la valeur seuil prédéterminée, qui est par exemple de 5°. Par conséquent, il est considéré que le signal 410 provient du même émetteur que celui ayant émis le signal 408. Alors, la position mémorisée E1 est corrigée en faisant la moyenne entre ladite position E1 préalablement mémorisée et la position E2 qui vient d'être détectée. Cette correction donne une nouvelle position, notée EC1, présentant un angle de site de 56°. Cette position EC1 est mémorisée. L'appareil de goniométrie aéroporté mobile n'a détecté qu'un seul émetteur fictif dont la position est EC1, alors qu'en réalité il existe deux émetteurs 404 et 406, dont les positions sont E1 et E2

La FIGURE 5 est une représentation schématique illustrant la configuration de la FIGURE 4 pour une nouvelle position de l'appareil de goniométrie aéroporté mobile 402 par rapport aux émetteurs radio 404 et 406.

Dans la configuration illustrée à la FIGURE 5, l'appareil de goniométrie aéroporté mobile 402 est plus proche des émetteurs 404 et 406, comparée à la configuration représentée sur la FIGURE 4. Dans cette position, et à titre d'exemple non limitatif :
- la position du premier émetteur 404 présente un angle de site 512, par exemple de 30° ;
- la position du deuxième émetteur 406 présente un angle de site 514, par exemple de 38° ; et
- l'émetteur fictif, se trouvant entre les émetteurs E1 et E2, à la position EC1 qui présente un angle de site de 34°.

Le premier émetteur 404 émet un signal 508, dit premier signal 508, qui est réceptionné pas l'appareil de goniométrie aéroporté mobile 402. À partir de ce signal, une position d'émission estimée est déterminée pour le premier signal 508, à savoir la position E1. La position estimée E1 présente un angle de site 512 de 30°. La différence entre l'angle de site de la position estimée E1 et l'angle de site de la position EC1 de l'émetteur fictif est de 4°, c'est-à-dire inférieur à la valeur seuil de 5°. Par conséquent, le premier signal est considéré comme étant émis par l'émetteur fictif et la position EC1 de l'émetteur fictif est corrigée en prenant en compte la position estimée E1. Mais, selon l'invention, la position estimée E1 est d'abord pondérée avec un coefficient de pondération lors du moyennage. Par exemple, la valeur du coefficient de pondération appliquée est égale à 100. La position estimée pondérée est moyennée avec la position EC1 de l'émetteur fictif pour obtenir une nouvelle position EC1', qui est très proche de la position réelle EC1 de l'émetteur 404.

Ainsi, suite à la correction, la position actuelle EC1 de l'émetteur fictif préalablement détecté a été déplacée à la position obtenue EC1'. La position corrigée EC1' est ensuite mémorisée en tant que nouvelle position actuelle de l'émetteur fictif. Ainsi, comme la pondération de la position estimée est importante, la position EC1 préalablement détectée pour l'émetteur fictif s'est déplacée en direction de la position réelle de l'émetteur E1 à une position EC1'. Dans les faits, l'émetteur fictif vient se confondre avec le premier émetteur 404, ce qui correspond à la détection dudit premier émetteur 404.

La nouvelle position EC1' présente un angle de site égale à ({100*30}+34)/101=30,0396°.

Lorsque l'appareil de goniométrie aéroporté mobile 402 reçoit un signal 510, émis par le deuxième émetteur 406, alors le deuxième signal 510 est traité pour déterminer une position estimée, dont l'angle de site est égal à 38°, c'est à dire l'angle de site de la position EC2. La différence entre l'angle de site de la position actuelle EC1', à savoir 30,0396°, et l'angle de site de la position estimée E2, c'est-à-dire 38°, est supérieure à la valeur seuil de 5°, alors un nouvel émetteur radio est créé et sa position est mémorisée comme étant la position E2.

Ainsi, l'appareil de goniométrie détecte bien deux émetteurs radio, l'un positionné à la position EC1', c'est-à-dire presque à la position E1 du premier émetteur, et l'autre à la position E2.

Ainsi, et de manière non limitative, plus l'appareil de goniométrie aéroporté mobile 402 se déplace en direction des émetteurs 404 et 406, plus l'angle de site associé aux positions estimés devient faible, et plus le coefficient de pondération utilisé peut être grand.

En particulier, il est possible d'utiliser les valeurs de pondération suivantes en fonction des angles de sites :
- 1 : lorsque l'angle de site est compris entre 90 et 45 degrés ;
- 100 : lorsque l'angle de site est compris entre 45 et 20 degrés ; et
- 10000 lorsque l'angle de site est compris entre 20 et 0 degrés.

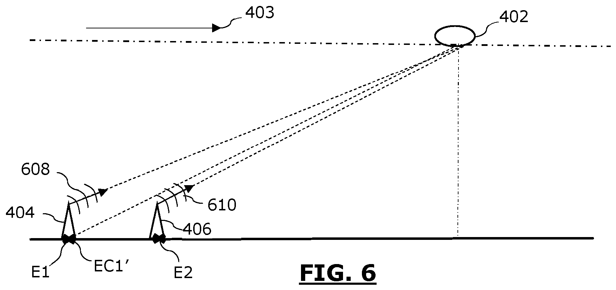

La FIGURE 6 est une représentation schématique illustrant la configuration de la FIGURE 4 pour encore une autre position de l'appareil de goniométrie aéroporté mobile 402 par rapport aux émetteurs 404 et 406.

Dans la configuration illustrée de la FIGURE 6, l'appareil de goniométrie aéroporté mobile 402 est passé à l'aplomb des émetteurs 404 et 406, et suit un mouvement dans lequel il s'éloigne du des émetteurs 404 et 406.

Comme l'appareil de goniométrie aéroporté 402 est passé au-dessus du premier émetteur 404 et du deuxième émetteur 406, la position actuelle EC1' a convergée vers la position réelle du premier émetteur 404, du fait des coefficients de pondération. Cela est dû au fait que les coefficients de pondérations sont plus élevés pour les angles de site de faible valeur. De plus, la position E2 du deuxième émetteur 406 a été également détectée comme décrit plus haut en référence à la FIGURE 5.

Comme l'appareil de goniométrie aéroporté mobile 402 s'éloigne des émetteurs 404 et 406, les angles de site associés aux positions estimées des émetteurs 404 et 406 augmentent. En outre, plus l'appareil de goniométrie aéroporté mobile 412 s'éloigne des émetteurs 404 et 406 plus la différence entre les angles de site des positions EC1' et EC2 diminue. Si la correction des positions des émetteurs préalablement détectés est conservée, cela risque de fausser la détection, déplacer les émetteurs déjà détectés vers des positions erronées, et éventuellement confondre à nouveau les émetteurs dans un émetteur fictif située entre les émetteurs réels E1 et E2.

Pour éviter cela, suivant une version avantageuse, l'invention permet de ne pas conserver une position corrigée pour un émetteur déjà détecté, si cette position corrigée présente un angle de site qui est supérieur à la position actuelle dudit émetteur.

Ainsi, dans l'exemple de la FIGURE 6, lorsque le premier émetteur 404 émet un nouveau signal 608, la position estimée est mesurée, moyennée avec la position EC1', éventuellement après pondération, pour obtenir une position corrigée. Comme l'appareil de goniométrie aéroporté 402 s'éloigne, l'angle de site de la position corrigée ainsi obtenue sera forcément plus petit que l'angle de site de la position actuelle EC1'. Ainsi, la position corrigée n'est pas mémorisée et la position actuelle EC1' est conservé.

Il est en est de même lorsque le deuxième émetteur 406 lorsqu'il émet un nouveau signal 610.

Bien entendu, l'invention n'est pas limitée aux exemples qui viennent d'être décrits. De nombreuses modifications peuvent être apportées à ces exemples sans sortir du cadre de la présente invention telle que décrite.

## Revendications

1. Procédé (200;300) pour localiser, avec un appareil de goniométrie aéroporté mobile (402), des émetteurs radios (404,406) émettant sur un même canal, ledit procédé (200;300) comprenant les étapes suivantes :
- réception (202), par ledit appareil de goniométrie aéroporté mobile (402), de signaux émis (408,508,608,410,510,610) par lesdits émetteurs (404,406) ; et
- pour au moins un signal reçu (408,508,608,410,510,610), détermination (204) d'une position d'un émetteur (404,406) dudit signal (408,508,608,410, 510,610), ladite étape de détermination (204) comprenant les étapes suivantes :
▪ mesure (206) d'une position d'émission, dite position estimée, dudit signal (408,508,608,410,510,610), ladite position comprenant un angle de site,
• lorsque la différence entre l'angle de site de ladite position estimée et l'angle de site d'une position actuelle d'un émetteur préalablement détecté est inférieure à une valeur seuil prédéterminée, correction (210) de la position actuelle dudit émetteur (404,406) par moyennage de ladite position estimée avec ladite actuelle position dudit émetteur (404,406),
▪ mémorisation (212) de ladite position corrigée comme nouvelle position dudit émetteur (404,406);
**caractérisé en ce que** l'étape de détermination (204) comprend en outre, préalablement à ladite étape de correction (210), une pondération (208) de la position estimée par un coefficient de pondération dont la valeur est fonction de la valeur de l'angle de site, ladite étape de correction (210) prenant en compte ladite position estimée pondérée.

2. Procédé (200;300) selon la revendication précédente, **caractérisé en ce que**, lors de l'étape de détermination (204), la position corrigée de l'émetteur est mémorisée comme nouvelle position de l'émetteur si et seulement si ladite position corrigée présente un angle de site inférieur à l'angle de la position actuelle dudit émetteur (404,406).

3. Procédé (300) selon l'une quelconque des revendications précédentes, **caractérisé en ce que**, lorsque la différence entre l'angle de site de ladite position estimée et l'angle de site d'une position actuelle d'un émetteur (404,406) préalablement détecté est supérieure à la valeur seuil prédéterminée, l'étape de détermination (204) comprend une étape de mémorisation (302) de ladite position estimée en tant position d'un nouvel émetteur.

4. Procédé (200;300) selon la revendication précédente, **caractérisé en ce que** la valeur seuil prédéterminée est égale à 5° degrés.

5. Procédé (200;300) selon l'une quelconque des revendications précédentes, **caractérisé en ce que** la valeur du coefficient de pondération prise en compte lors de l'étape de correction augmente lorsque l'angle de site de la position estimée diminue.

6. Procédé (200;300) selon l'une quelconque des revendications précédentes, **caractérisé en ce qu'**il utilise plusieurs, en particulier trois, intervalles d'angles de site prédéfinis, et pour chaque intervalle une valeur différente prédéfinie pour le coefficient de pondération.

7. Procédé (200;300) selon la revendication précédente, **caractérisé en ce que** le coefficient de pondération associé à un intervalle est utilisé, lorsque plusieurs, en particulier quatre, positions d'émetteurs mémorisées, ont un angle de site se trouvant dans ledit intervalle.

8. Procédé (200;300) selon l'une quelconque des revendications 4 à 5, **caractérisé en ce que** :
- un premier intervalle comprend les angles de site compris entre 90 et 45 degrés,
- un deuxième intervalle comprend les angles de site compris entre 45 et 20 degrés,
- un troisième intervalle comprend les angles de site compris entre 20 et 0 degrés.

9. Procédé (200;300) selon la revendication 8, **caractérisé en ce que** :
- une première valeur de pondération prédéterminée est associée au premier intervalle ;
- une deuxième valeur de pondération est associée au deuxième intervalle, ladite deuxième valeur étant supérieure à la première valeur de pondération, de préférence au moins dix fois supérieure à la première valeur, en particulier au moins cent fois supérieure à la première valeur ; et
- une troisième valeur de pondération est associée au troisième intervalle, ladite troisième valeur étant supérieure à la deuxième valeur de pondération, de préférence au moins cent fois supérieure à la première valeur, en particulier au moins mille fois supérieure.

10. Procédé (200;300) selon la revendication précédente, **caractérisé en ce que** ladite première valeur de pondération est inférieure ou égale à 10, de préférence égale à 1.

11. Programme informatique comprenant des instructions exécutables par un dispositif informatique, qui lorsqu'elles sont exécutées, mettent en œuvre toutes les étapes du procédé (200;300) selon l'une quelconque des revendications précédentes.

12. Dispositif informatique comprenant des moyens configurés pour mettre en œuvre toutes les étapes du procédé (200;300) selon l'une quelconque des revendications 1 à 10.

13. Appareil de goniométrie aéroporté comprenant :
- des moyens configurés pour mettre en œuvre toutes les étapes du procédé selon l'une quelconque des revendications 1 à 10, ou
- un programme informatique selon la revendication 11, ou
- un dispositif informatique selon la revendication précédente.
